# EUROPÄISCHE PATENTSCHRIFT

(11) **EP 3 353 592 B1**
(45) Veröffentlichungstag und Bekanntmachung des Hinweises auf die Patenterteilung: **17.06.2020**
(21) Anmeldenummer: 17740362.3
(22) Anmeldetag: 07.07.2017
(51) Int. Cl.: G02B 27/09, G01B 11/02, G02B 27/20, F21V 5/00, G01S 17/08, G01S 7/481

(54) **ENTFERNUNGSMESSVORRICHTUNG**
DISTANCE MEASURING DEVICE
DISPOSITIF DE MESURE DE DISTANCE

(30) Priorität: 08.07.2016 DE 102016112557
(43) Veröffentlichungstag der Anmeldung: 01.08.2018
(73) Patentinhaber: JENOPTIK Optical Systems GmbH, 07745 Jena (DE)
(72) Erfinder: SCHALLER, Uwe, 07768 Kahla (DE); FRIESEL, Marco, 99510 Oberndorf (DE)
(74) Vertreter: Waldauf, Alexander
(86) Internationale Anmeldenummer: PCT/EP2017/067095
(87) Internationale Veröffentlichungsnummer: WO 2018/007590

(56) Entgegenhaltungen:
- EP-A1- 0 767 392
- EP-A1- 2 363 726
- WO-A1-2010/108365
- WO-A1-2011/029645
- DE-U1-202012 012 637
- US-A1- 2002 018 217
- US-A1- 2003 233 029
- US-A1- 2008 266 862

## Beschreibung

Die vorliegende Erfindung bezieht sich auf eine Entfernungsmessvorrichtung.

Aus der Druckschrift EP 0 468 302 A2 ist ein Entfernungsmessgerät bekannt. Bei diesem Entfernungsmessgerät handelt es sich um ein interferometrisch arbeitendes Gerät, wobei die Kugellinse als Resonator (Vielfachreflexionen bzw. Stehwellen im Inneren der Kugel) fungiert. Dieser würde nicht gut funktionieren, d. h., es würde sich kein hinreichend ausgeprägtes Interferenzmuster ausbilden (welches das dort beschriebene Gerät zur Funktion benötigt), wenn die dort verwendete Kugellinse (im maßgeblichen Wellenlängenbereich) hochtransmittierend wäre.

Die US 2002/0018217 A1 und die WO 2010/108365 A1 offenbaren eine optische Strahlformungseinheit zum Formen eines Strahlenbündels, wobei die optische Strahlformungseinheit zumindest eine Kugellinse zum Formen des Strahlenbündels aufweist, wobei die Kugellinse einen Hauptanteil von auf die Kugellinse auftreffendem Licht passieren lässt und wobei die optische Strahlformungseinheit zumindest eine optische Einheit mit einer positiven effektiven Brennweite aufweist, die in einem Strahlengang mit der Kugellinse angeordnet ist.

Vor diesem Hintergrund schafft die vorliegende Erfindung eine verbesserte Entfernungsmessvorrichtung gemäß dem Hauptanspruch. Vorteilhafte Ausgestaltungen ergeben sich aus den Unteransprüchen und der nachfolgenden Beschreibung.

Es wird eine optische Strahlformungseinheit zum Formen eines Strahlenbündels vorgestellt. Die optische Strahlformungseinheit weist zumindest eine Kugellinse zum Formen des Strahlenbündels auf, wobei die Kugellinse einen Hauptanteil von auf die Kugellinse auftreffendem Licht passieren lässt und wobei die optische Strahlformungseinheit zumindest eine optische Einheit mit einer positiven effektiven Brennweite aufweist, die in einem Strahlengang mit der Kugellinse angeordnet ist.

Unter einer optischen Strahlformungseinheit kann eine Vorrichtung zur optischen Ablenkung oder Brechung eines Strahlenbündels verstanden werden. Unter einer Kugellinse kann eine im Wesentlichen kugelförmige Linse verstanden werden. Die Kugellinse kann ausgebildet sein, um das Strahlenbündel von einer Objektebene auf eine Bildebene abzubilden. Beispielsweise kann die Kugellinse aus Glas oder einem transparenten Kunststoff gefertigt sein. Insbesondere kann die Kugellinse etwa aus einem Saphirmaterial mit hohem Brechungsindex gefertigt sein. Bei der Kugellinse kann es sich beispielsweise um ein Massenprodukt für die Faserkopplung handeln, wie es etwa für Linsenstecker zur Verbindung von Lichtwellenleitern verwendet wird. Die Kugellinse kann beispielsweise Teil eines Laserdioden-Kollimators der optischen Strahlformungseinheit sein. Die Kugellinse soll den Hauptteil, d. h. mindestens die Hälfte des auf die Kugellinse auftreffenden Lichts passieren lassen, also für diesen Teil des Lichts transparent bzw. transmittierend sein. Bevorzugt ist die Kugellinse für mindestens Dreiviertel des auf die Kugellinse auftreffenden Lichts transparent, speziell sollte die Kugellinse für mindestens achtzig Prozent oder noch günstiger für zumindest neunzig Prozent des auf die Kugellinse eintreffenden Lichts transparent bzw. durchlässig sein. Bei der optischen Einheit kann es sich um eine Einheit mit einer positiven effektiven Brennweite handeln. Beispielsweise kann die optische Einheit zum Kollimieren des Strahlenbündels ausgebildet sein und/oder es kann sich bei der optischen Einheit beispielsweise um eine Linse, ein Linsensystem oder einen Spiegel handeln. Das Design der Linse ist so ausgelegt (Schichtdesign) den physikalisch maximal möglichen Anteil des Lichts zu transmittieren (Grenzen sind die Fresnelschen Verluste).

Der hier beschriebene Ansatz beruht auf der Erkenntnis, dass durch Verwendung einer Kugeloptik zur Formung eines Strahlenbündels innerhalb einer optischen Strahlformungseinheit eine Baulänge der optischen Strahlformungseinheit minimiert werden kann. Ein weiterer Vorteil besteht in der einfachen Variabilität von Baulänge und Brennweite sowie in einer vereinfachten Justage. Dadurch, dass auf teure Linsen mit entsprechend teurer Fassung und Montage verzichtet werden kann und auf einfache Fassungstechnik wie etwa Gratfassen zurückgegriffen werden kann, können zudem die Herstellungskosten der optischen Strahlformungseinheit deutlich reduziert werden.

Erfindungsgemäss umfasst die Entfernungsmessvorrichtung zumindest eine Lichtquelle zum Erzeugen des Strahlenbündels. Die Kugellinse ist ausgebildet, um das von der Lichtquelle erzeugte Strahlenbündel auf das optische Element abzubilden. Unter einer Lichtquelle kann beispielsweise eine Leuchtdiode oder eine Laserdiode verstanden werden. Hierbei ist die Kugellinse in einem Strahlengang des Strahlenbündels zwischen der optischen Einheit und der Lichtquelle angeordnet. Beispielsweise ist ein Abstand zwischen der Kugellinse und der Lichtquelle oder auch ein Abstand zwischen der Kugellinse und der optischen Einheit variierbar. Dadurch kann beispielsweise bei einer in einer Entfernungsmessvorrichtung verbauten optischen Strahlformungseinheit die resultierende Brennweite der Anordnung variiert werden, wodurch eine Veränderung der Divergenz eines Sende- oder Empfangskanals bewirkt wird. Die Performance (wie z.B. die Reichweite) der Entfernungsmessvorrichtung kann so verbessert werden.. Die Kugellinse bildet die Quelle (Laserdiode oder APD, ...) in eine Zwischenbildebene ab, welche die Fokalebene des optischen Elements darstellt. Die verbesserte Reichweite hängt dabei neben weiteren Faktoren im Wesentlichen von der Divergenz des Laserstrahls ab, die durch Abstandsvariation beeinflusst wird.

Hierbei kann die optische Einheit als Sammellinse, Spiegel und/oder Linsensystem ausgebildet sein. Insbesondere kann die optische Einheit beispielsweise als plankonvexe Sammellinse ausgebildet sein. Eine solche optische Einheit kann besonders kostengünstig bereitgestellt werden. Die plankonvexe Linse ist üblicherweise eine asphärische Linse, welche teuer ist. Gemäß einer besonderen Ausführungsform zur Verwendung hier wird sie aber blank gepresst und ist dadurch kostengünstig.

Gemäß einer weiteren Ausführungsform kann die Lichtquelle ausgebildet sein, um einen Laserstrahl als das Strahlenbündel auszusenden. Insbesondere kann die Lichtquelle als Laserdiode ausgebildet sein. Je nach Ausführungsform kann die optische Strahlformungseinheit eine Laserdiode aufweisen. Dabei können Singlestacks, gestackte Einzelbarren oder Nanostack-Laserdioden verwendet werden.

Gemäß einer weiteren Ausführungsform kann die Lichtquelle in einem Wellenlängenbereich Lambda_B das Strahlenbündel aussenden und die Kugellinse lässt in dem Wellenlängenbereich Lambda_B, bevorzugt ausschließlich in dem Wellenlängenbereich Lambda_B, einen Hauptanteil von auf die Kugellinse auftreffendem Licht passieren.

Erfindungsgemäß ist die Kugellinse und/ oder die optische Einheit in einer z-Richtung z verschiebbar ausgeführt. Beispielsweise kann die Kugellinse in einer ersten Fassung gehaltert sein. Beispielsweise kann die optische Einheit in einer zweiten Fassung gehaltert sein. Sowohl die Baugruppe aus Kugellinse und erster Fassung sowie die Baugruppe aus optischer Einheit und zweiter Fassung können verschiebbar ausgeführt sein. Mit dieser Ausführungsform kann eine Divergenz des Strahlenbündels nach der optischen Einheit eingestellt werden.

Gemäß einer weiteren Ausführungsform kann die Lichtquelle in der z-Richtung z verschiebbar ausgeführt sein. Mit einer derartigen Ausführungsform kann bei Lichtquellen mit einer astigmatischen Abstrahlcharakteristik ein vordefinierter Strahlquerschnitt erzeugt werden.

Die Entfernungsmessvorrichtung weist auch eine Detektoreinrichtung zum Detektieren eines einfallenden Strahlenbündels auf. Zusätzlich oder alternativ kann die optische Strahlformungseinheit zumindest eine weitere Kugellinse aufweisen. Hierbei kann die weitere Kugellinse ausgebildet sein, um das einfallende Strahlenbündel auf die Detektoreinrichtung zu lenken. Bei dem einfallenden Strahlenbündel kann es sich beispielsweise insofern um das von der Lichtquelle ausgesandte Strahlenbündel handeln, als dieser durch Reflexion an einem entfernten Objekt zur optischen Strahlformungseinheit zurückgelenkt wird. Unter einer Detektoreinrichtung kann ein lichtempfindliches Bauelement verstanden werden, etwa in Form einer Kamera, einer Fotodiode oder einer CCD-Zeile. Beispielsweise können die Lichtquelle, die Kugellinse und das optische System mit positivem EFL (effective focal length) einen Sendekanal der optischen Strahlformungseinheit repräsentieren, während die Detektoreinrichtung und die weitere Kugellinse und das optische System mit positivem EFL einen Empfangskanal der optischen Strahlformungseinheit repräsentieren können. Je nach Ausführungsform kann es sich bei dem Sendekanal und dem Empfangskanal um räumlich getrennte Kanäle oder um ein und denselben Kanal handeln. Im letzteren Fall kann die Kugellinse dazu dienen, um sowohl das einfallende Strahlenbündel auf die Detektorrichtung zu lenken als auch, in umgekehrter Richtung, den von der Lichtquelle erzeugten Strahlenbündel auf das optische Element zu lenken. Durch diese Ausführungsform wird eine beim Verbau der optischen Strahlformungseinheit in einer Entfernungsmessvorrichtung eine Entfernungsmessung mittels z.B. Laufzeitmessung oder Phasenlagemessung ermöglicht.

Gemäß einer weiteren Ausführungsform kann die optische Strahlformungseinheit zumindest eine optische Zusatzeinheit zum Lenken des einfallenden Strahlenbündels auf die weitere Kugellinse aufweisen. Bei der optischen Zusatzeinheit kann es sich beispielsweise um eine Linse, ein Linsensystem oder einen Spiegel handeln.

Die optische Zusatzeinheit kann ausgebildet sein, um das einfallende Strahlenbündel auf die Objektebene oder Bildebene der Kugellinse zu fokussieren. Durch diese Ausführungsform kann das einfallende Strahlenbündel gezielt auf die Objektebene oder Bildebene der weiteren Kugellinse abgebildet werden.

Besonders vorteilhaft ist eine Ausführungsform des hier vorgestellten Ansatzes, bei der eine Entfernungsmessvorrichtung mit einer optischen Strahlformungseinheit gemäß einer hier vorgestellten Variante vorgesehen ist. Beispielsweise kann die Entfernungsmessvorrichtung oder der Laserbeleuchter einen Halbleiter-Lasersender oder die Entfernungsmessvorrichtung einen Halbleiter-Laserempfänger beinhalten.

Die Erfindung wird anhand der beigefügten Zeichnungen beispielhaft näher erläutert. Es zeigen:
- Figur 1: eine schematische Darstellung einer Entfernungsmessvorrichtung gemäß einem Ausführungsbeispiel; und
- Figur 2: eine schematische Darstellung einer optischen Strahlformungseinheit gemäß einem Ausführungsbeispiel; und
- Figur 3: eine schematische Darstellung einer optischen Strahlformungseinheit gemäß einem weiteren Ausführungsbeispiel; und
- Figur 4: eine schematische Darstellung einer Abstrahlcharakteristik einer erfindungsgemäßen Lichtquelle; und
- Figur 5: eine schematische Darstellung einer optischen Strahlformungseinheit gemäß einem weiteren Ausführungsbeispiel.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

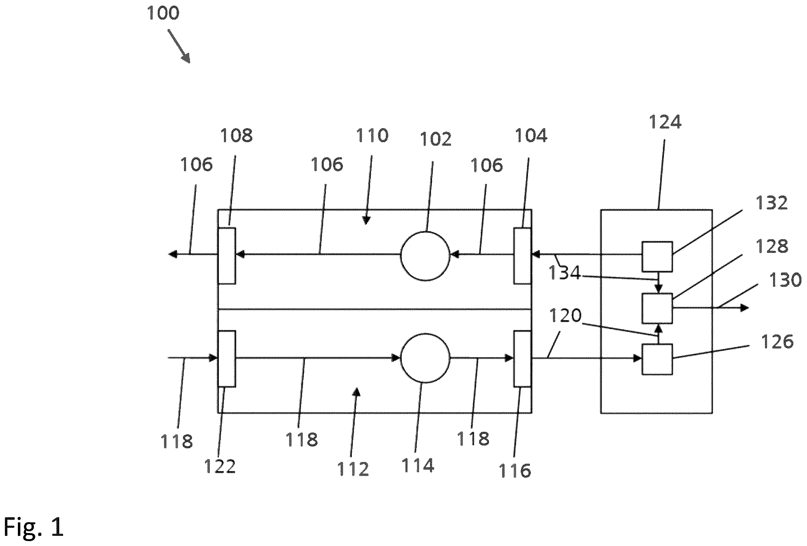

Figur 1 zeigt eine schematische Darstellung einer Entfernungsmessvorrichtung 100 mit einer optischen Strahlformungseinheit gemäß einem Ausführungsbeispiel. Die Entfernungsmessvorrichtung 100 umfasst eine Kugellinse 102, die ausgebildet ist, um ein von einer Lichtquelle 104 ausgesandtes Strahlenbündel 106, hier einen Laserstrahl, zu formen. Das Strahlenbündel 106 ist in Figur 1 schematisch als Pfeil angedeutet. In Wirklichkeit handelt es sich bei dem Strahlenbündel 106 um ein Strahlenbündel aus einer Mehrzahl von Teilstrahlenbündeln.

Gemäß diesem Ausführungsbeispiel ist die Kugellinse 102 zwischen der Lichtquelle 104 und einer optischen Einheit 108, etwa einer Sammellinse, angeordnet. Hierbei bildet die Kugellinse 102 das Strahlenbündel 106 in geeigneter Weise auf der Objektebene oder Bildebene der optischen Einheit 108 ab. Die optische Einheit 108 ist ausgebildet, um das von der Kugellinse 102 abgebildete Strahlenbündel 106 zu kollimieren.

Die Kugellinse 102 weist je nach Ausführungsbeispiel einen Durchmesser zwischen 0,5 mm und 8 mm auf.

Die Lichtquelle 104, die Kugellinse 102 und die optische Einheit 108 bilden einen Sendekanal 110 der Entfernungsmessvorrichtung 100. Zusätzlich zum Sendekanal 110 weist die Entfernungsmessvorrichtung 100 gemäß dem in Figur 1 gezeigten Ausführungsbeispiel einen Empfangskanal 112 auf, der eine weitere Kugellinse 114 und eine Detektoreinrichtung 116 umfasst. Die weitere Kugellinse 114 und die weitere optische Einheit 122 sind ausgebildet, um ein in den Sendekanal 110 reflektiertes Strahlenbündel 118, hier ebenfalls als Pfeil angedeutet, auf die Detektoreinrichtung 116 zum Detektieren des einfallenden Strahlenbündels 118 zu fokussieren. Als Ergebnis der Detektion gibt die Detektoreinrichtung 116 ein Detektorsignal 120 aus.

Zusätzlich ist in dem hier beschriebenen Ausführungsbeispiel der weiteren Kugellinse 114 eine optische Zusatzeinheit 122, etwa in Form einer weiteren Sammellinse, vorgeschaltet. Die optische Zusatzeinheit 122 ist ausgebildet, um das einfallende Strahlenbündel 118 in geeigneter Weise auf die Objektebene oder Bildebene der Kugellinse 114 zu lenken.

Wie in Figur 1 zu erkennen, sind der Sendekanal 110 und der Empfangskanal 112 benachbart zueinander angeordnet. Ferner verlaufen die beiden Kanäle 110, 112 hier im Wesentlichen parallel zueinander. Dadurch kann die Bauform der Entfernungsmessvorrichtung 100 möglichst kompakt gehalten werden.

Die Lichtquelle 104 und die Detektoreinrichtung 116 sind gemäß einem Ausführungsbeispiel je mit einer Vorrichtung 124 verbunden. Die Vorrichtung 124 umfasst eine Einleseeinheit 126 zum Einlesen des Detektorsignals 120. Die Einleseeinheit 126 leitet das Detektorsignal 120 weiter an eine Ermittlungseinheit 128 zum Ermitteln eines die Entfernung repräsentierenden Messwerts 130 unter Verwendung des Detektorsignals 120.

Gemäß diesem Ausführungsbeispiel umfasst die Vorrichtung 124 eine optionale Steuereinheit 132 zum Ansteuern der Lichtquelle 104 mittels eines entsprechenden Ansteuersignals 134. Beispielsweise leitet die Steuereinheit 132 das Ansteuersignal 134 zusätzlich an die Ermittlungseinheit 128 weiter, wobei die Ermittlungseinheit 128 ausgebildet ist, um den Messwert 130 ferner unter Verwendung des Ansteuersignals 134 zu ermitteln.

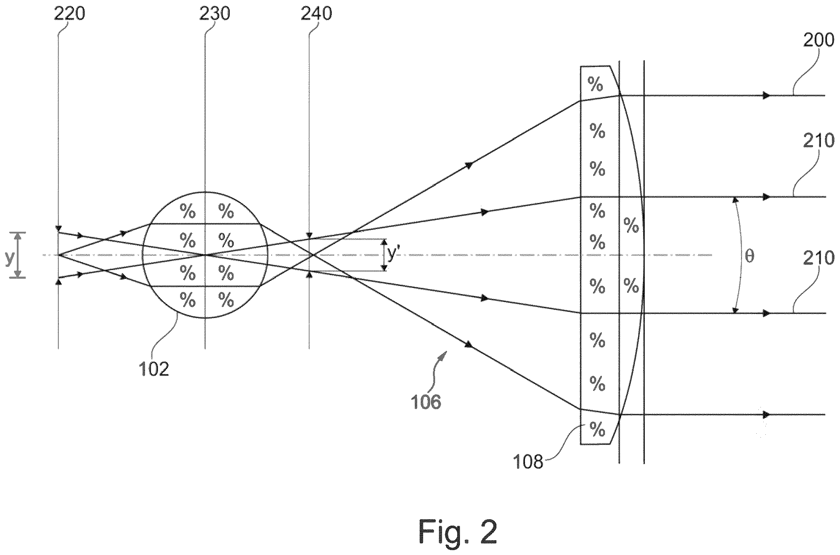

Figur 2 zeigt eine schematische Darstellung eines Strahlengangs in einer optischen Strahlformungseinheit gemäß einem Ausführungsbeispiel, etwa einer vorangehend anhand von Figur 1 beschriebenen Entfernungsmessvorrichtung 100. Die optische Strahlformungseinheit weist die Kugellinse 102 und die optische Einheit 108 auf, die hier als asphärische plankonvexe Linse ausgestaltet ist. Im Unterschied zu Figur 1 ist das Strahlenbündel 106 hier als Strahlenbündel mit dem Aperturstrahl 200 und dem Feldstrahl 210 dargestellt. Ein Objekt y in der Objektebene 220 wird durch die Kugellinse 102 auf die Bildebene 240 der Kugellinse 102 abgebildet, wobei eine Bildhöhe y' in dieser Bildebene 240 der Kugellinse 102 resultiert. Die Feldstrahlen 210 weisen hierbei eine Divergenz θ zwischen dem Sender und dem Empfänger auf. Die Feldstrahlen beginnen an den Randpunkten des Objektes (d.h. hier der Laserdiode) und bilden die Randstrahlen der Divergenz nach der Kollimation.

Zusammenfassend lässt sich anmerken, dass gemäß dem hier vorgestellten Ansatz erste optische System als transparente, hoch-transmittierende Kugel ausgeführt ist. Durch das Einstellen des Objektabstandes (d. h. der Objektebene der Quelle zu Hauptebene der Kugellinse) ergibt sich nach der nachfolgend noch weiter beschriebenen Abbildungsgleichung ein bestimmter Bildabstand (Hauptebene der Kugellinse - Bildebene der Quelle) und damit ein definierter und in großen Grenzen variierbarer Abbildungsmaßstab. Dies bedeutet, die Bildgröße der Strahlungsquelle oder Empfangsfläche kann verkleinert oder vergrößert werden. Bei gleicher Brennweite (EFL) des zweiten optischen Systems (hier einer asphärischen Einzellinse) resultiert daraus eine unterschiedliche Divergenz der Laserstrahlung bzw. des Empfangsstrahlenbündels.
θₛₜᵣₐₕₗ = y'/f₂' = Bildgröße des ersten optischen Systems / EFL des zweiten optischen Systems;
wobei die Brennweite f₂' in der Fig. 2 dem Abstand zwischen der Hauptebene der Linse 108 und der Ebene 240 entspricht.
Wenn also der Abbildungsmaßstab
β' = y'/y = Bildgröße nach Abbildung durch das erste optische System / Objektgröße der Quelle
kleiner als 1 ist, wird ein verkleinertes reelles Bild der Quelle erzeugt und bei gleicher Brennweite f₂' eine kleinere resultierende Divergenz entstehen.

Soll die Baulänge der gesamten optischen Strahlformungseinheit (TOTR) kurz sein, sollte das erste optische System eine extrem kurze Brennweite aufweisen.

Hierfür eignet sich die Kugel, die es standardmäßig mit Durchmessern im Bereich 0,5 mm bis 8 mm gibt, ideal. Dabei sind vor allem die Durchmesser von 0,5 mm bis 2 mm interessant (Brennweiten bei Saphirmaterial von 0,3 mm bis 1,2 mm).

Aufgrund der sehr kurzen Objektschnittweiten (Objektebene-Hauptebene des ersten optischen Systems) und der kleinen Abstrahlaperturen der Laserquelle wird die optische wirksame Fläche auf der Kugel auf einen achsnahen Bereich beschränkt. Nur hierdurch bleiben die Abbildungsfehler der Kugel gering. Die verbleibenden Abbildungsfehler( vor allem Öffnungsfehler) werden durch die asphärische Form des zweiten optischen Systems korrigiert, wie es in dem Ausführungsbeispiel beschrieben ist.

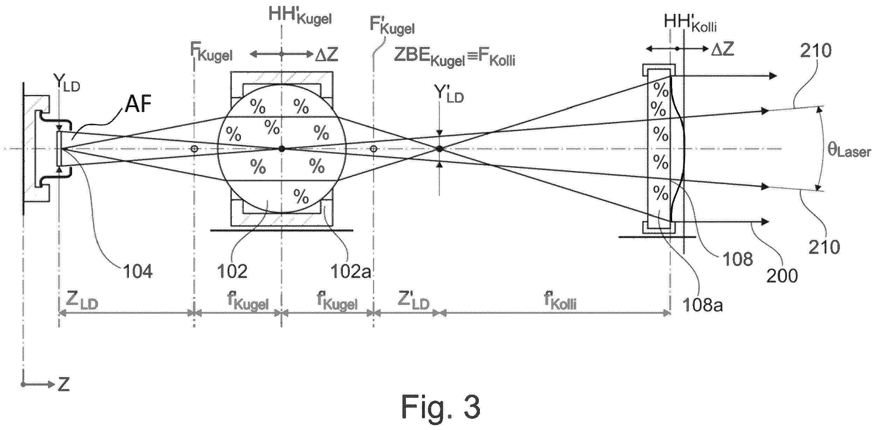

Figur 3 zeigt eine schematische Darstellung eines Strahlengangs in einer optischen Strahlformungseinheit gemäß einem Ausführungsbeispiel, etwa einer vorangehend anhand von Figur 1 beschriebenen Entfernungsmessvorrichtung 100. Die optische Strahlformungseinheit weist die Kugellinse 102 und die optische Einheit 108 auf, die hier als asphärische plankonvexe Linse ausgestaltet ist.

In der Regel soll bei Entfernungsmessvorrichtungen eine möglichst kleine Divergenz der Laserstrahlung aus einer definierten Abstrahlfläche AF einer Lichtquelle 104 erreicht werden, d.h., dass durch die Kugellinse 102 ein verkleinertes Bild der Abstrahlfläche in der Zwischenbildebene ZBE_{Kugel} der Anordnung erzeugt werden muss. Im Ausführungsbeispiel ist die Kugellinse 102 in einer in z-Richtung verschiebbaren Fassung 102a gehaltert. Verschiebt man diese Baugruppe in z-Richtung, d.h. verändert man den Abstand Z_{LD}, so ändert sich der Abstand der Abstrahlfläche AF zur Hauptebene HH'_{Kugel} der Kugellinse 102. Dabei ändert sich auch die Lage des Zwischenbildes ZBE_{Kugel} nach der bekannten Relation Z'_{LD}= f'²Kugel/ Z_{LD} (paraxiale Abbildungsgleichung). Die in einer weiteren Fassung 108a montierte und als Kollimator ausgebildete optische Einheit 108 ist ebenfalls in z-Richtung verschiebbar und wird so verschoben, dass die Fokalebene F_{Kolli} des Kollimators 108 wieder mit der Zwischenbildebene ZBE_{Kugel} der Kugellinse 102 zusammenfällt. Damit ist eine saubere Kollimation des aus der Abstrahlfläche AF austretenden Strahlenbündels gewährleistet. Es entsteht eine, dem Zwischenbild proportionale Laserdivergenz nach der Formel: tanΘ= y_{LD}/f'_{Kolli}.

Geht man z.B. von einer 1:1 Abbildung der Austrittsfläche AF in die ZBE_{Kugel} aus und wählt eine Kugellinse 102 von 1 mm Durchmesser, so ergibt eine Verschiebung der Kugellinse 102 in z-Richtung von 1 mm, eine Halbierung der Laserausgangsdivergenz.

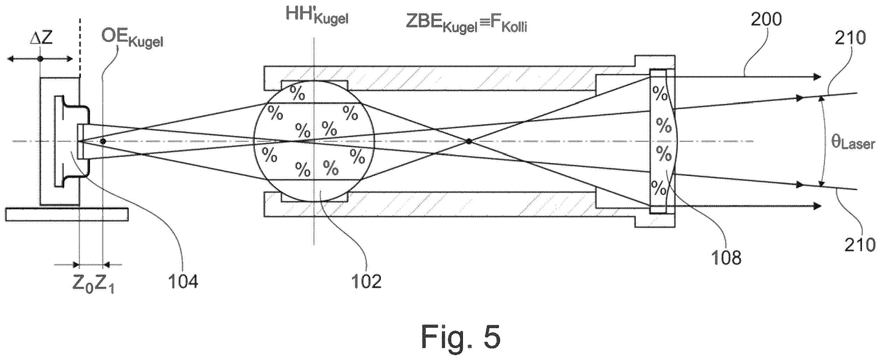

Figur 5 zeigt eine schematische Darstellung eines Strahlengangs in einer optischen Strahlformungseinheit gemäß einem Ausführungsbeispiel, etwa einer vorangehend anhand von Figur 1 beschriebenen Entfernungsmessvorrichtung 100. Die optische Strahlformungseinheit weist die Kugellinse 102 und die optische Einheit 108 auf, die hier als asphärische plankonvexe Linse ausgestaltet ist.

Dieses weitere Ausführungsbeispiel soll zeigen, wie durch die beschriebene Anordnung die Relation von meridionaler und sagittaler Ausdehnung des Laserstrahles im Fernfeld variiert werden kann.

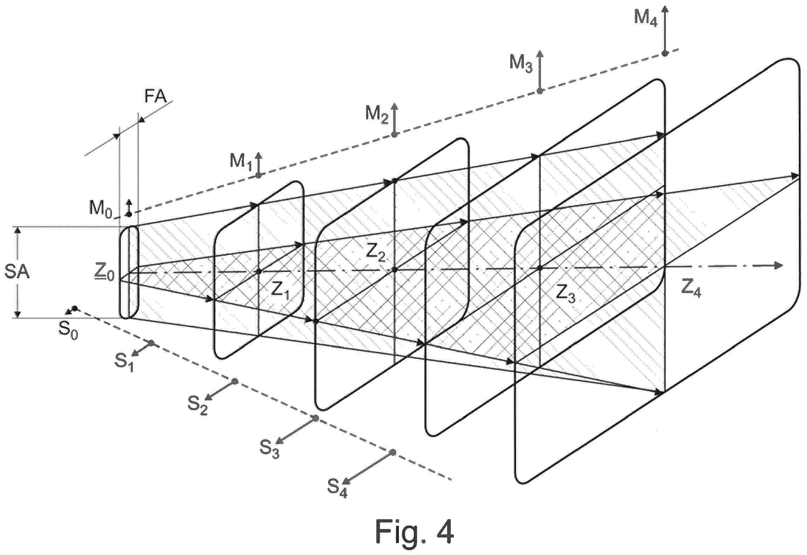

Halbleiterlaserdioden haben auf Grund ihrer Struktur eine Laseraustrittsöffnung in der slow axis-Richtung (SA) 80 µm bis circa 200 µm und der fast axis-Richtung (FA) 1 µm bis circa 10 µm. Die in der Lasermesstechnik angewendeten Halbleiterlaserdioden besitzen eine stark astigmatische Abstrahlcharakteristik. Typische Abstrahlwinkel sind dabei in der SA 6° bis 15 ° und in der FA 20° bis 25°. Figur 4 zeigt qualitativ eine solche Abstrahlcharakteristik. In der Figur ist deutlich zu sehen, wie sich die Relation S₀/M₀,...S₄/M₄ in Abhängigkeit von der z-Position (Z₀,......Z₄ ) stetig ändert.

Bei der Anwendung derartiger Halbleiterlaserdioden in Laserentfernungsmessvorrichtungen oder Laserbeleuchtern ist man bestrebt, einen möglichst quadratischen (Z₁), zumindest aber einen vordefinierten Strahlquerschnitt (Z₂, ....Z₄) zu erzeugen.

Eine Anordnung zur Erzeugung eines vordefinierten Strahlquerschnittes zeigt Fig. 5. Die optische Anordnung, beispielsweise eine Entfernungsmessvorrichtung, ist identisch der in Fig.1 gezeigten Grundanordnung. In diesem Ausführungsbeispiel gemäß Fig.5 ist jedoch die als Lichtquelle 104 ausgebildete Laserdiode in z-Richtung verschiebbar angeordnet, wobei die Lage der Kugellinse 102 zum Kollimator 108 nicht veränderbar ist und die Zwischenbildebene der Kugellinse ZBE_{Kugel} mit der Fokalebene Fₖₒₗₗᵢ des Kollimators 108 zusammenfallen.

Durch die Verschiebung der Laserdiode 104 in z-Richtung kommen stets andere Strahlquerschnitte der Laserapertur (S₁-M₁ ....... S₄-M₄) aus Fig. 4 in die Objektebene OE_{Kugel} der Kugellinse 102. Es entstehen in der Bildebene der Kugellinse ZBE_{Kugel} in meridionaler und sagittaler Richtung proportionale Zwischenbilder. Diese werden vom Kollimator 108 ins Fernfeld abgebildet (kollimiert). Es entstehen in Abhängigkeit von der z-Lage (Z₁ ... Z₄ in Fig.4) daher Laserstrahlquerschnitte mit unterschiedlichem meridionalem und sagittalem Ausdehnungsverhältnis. Wird beispielsweise die Laserdiode 104 so verschoben, dass die z-Position Z₁ in Fig. 4 in der Objektebene der Kugellinse 102 positioniert ist, entsteht ein quadratischer Strahlquerschnitt im Fernfeld.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Entfernungsmessvorrichtung (100) mit einer optischen Strahlformungseinheit (102, 108) zum Formen eines Strahlenbündels (106),
wobei die optische Strahlformungseinheit (102, 108) zumindest eine Kugellinse (102) zum Formen des Strahlenbündels (106) aufweist, wobei die Kugellinse (102) einen Hauptanteil von auf die Kugellinse (102) auftreffendem Licht passieren lässt und wobei die optische Strahlformungseinheit (102, 108) zumindest eine optische Einheit (108) mit einer positiven effektiven Brennweite aufweist, die in einem Strahlengang mit der Kugellinse (102) angeordnet ist, **dadurch gekennzeichnet, dass** die Kugellinse (102) und/ oder die optische Einheit (108) bezüglich eines Koordinatensystems xyz in einer z-Richtung (z) verschiebbar ausgeführt sind, um eine Divergenz des Strahlenbündels nach der optischen Einheit einzustellen und zumindest eine Lichtquelle (104) zum Erzeugen des Strahlenbündels (106) vorgesehen ist und die z-Richtung der Ausbreitungsrichtung des Strahlenbündels entspricht, wobei die Kugellinse (102) ausgebildet ist, um das von der Lichtquelle (104) erzeugte Strahlenbündel (106) in Richtung der optischen Einheit (108) abzubilden und eine Detektoreinrichtung (116) zum Detektieren eines einfallenden Strahlenbündels (118) vorgesehen ist.

2. Entfernungsmessvorrichtung (100) gemäß Anspruch 1, **dadurch gekennzeichnet, dass** die optische Einheit (108) als Sammellinse, als Spiegel und/oder als ein Linsensystem ausgebildet ist.

3. Entfernungsmessvorrichtung (100)gemäß Anspruch 1 oder 2, **dadurch gekennzeichnet, dass** die Lichtquelle (104) ausgebildet ist, um einen Laserstrahl als das Strahlenbündel (106) auszusenden, insbesondere wobei die Lichtquelle (104) als Laserdiode ausgebildet ist.

4. Entfernungsmessvorrichtung (100) gemäß einem der vorangegangenen Ansprüche, **dadurch gekennzeichnet, dass** die Lichtquelle (104) in einem Wellenlängenbereich Lambda_B das Strahlenbündel aussendet und die Kugellinse (102) in dem Wellenlängenbereich Lambda_B einen Hauptanteil von auf die Kugellinse (102) auftreffendem Licht passieren lässt.

5. Entfernungsmessvorrichtung (100) gemäß einem der vorangegangenen Ansprüche, **dadurch gekennzeichnet, dass** die Lichtquelle (104) in der z-Richtung (z) verschiebbar ausgeführt ist.

6. Entfernungsmessvorrichtung (100) gemäß einem der vorangegangenen Ansprüche, **gekennzeichnet durch** zumindest eine weitere Kugellinse (114), wobei die weitere Kugellinse (114) ausgebildet ist, um das einfallende Strahlenbündel (118) auf die Detektoreinrichtung (116) zu lenken.

7. Entfernungsmessvorrichtung (100) gemäß Anspruch 6, **gekennzeichnet durch** zumindest eine optische Zusatzeinheit (122) zum Lenken des einfallenden Strahlenbündels (118) auf die weitere Kugellinse (114).

## Claims

1. Distance measuring device (100) with an optical beam shaping unit (102, 108) for shaping a beam (106), wherein the optical beam shaping unit (102, 108) has at least one spherical lens (102) for shaping the beam (106), wherein the spherical lens (102) allows a major portion of light that is incident on the spherical lens (102) to pass and wherein the optical beam shaping unit (102, 108) has at least one optical unit (108) with a positive effective focal length, which is arranged in one beam path with the spherical lens (102), **characterized in that** the spherical lens (102) and/or the optical unit (108) are/is embodied to be displaceable in a z-direction (z) with respect to a co-ordinate system xyz to set a divergence of the beam downstream of the optical unit and at least one light source (104) for producing the beam (106) is provided and the z-direction corresponds to the propagation direction of the beam, wherein the spherical lens (102) is embodied to image the beam (106), which is produced by the light source (104), in the direction of the optical unit (108) and a detector apparatus (116) for detecting an incident beam (118) is provided.

2. Distance measuring device (100) according to Claim 1, **characterized in that** the optical unit (108) is embodied as a converging lens, as a mirror and/or as a lens system.

3. Distance measuring device (100) according to Claim 1 or 2, **characterized in that** the light source (104) is embodied to emit a laser beam as the beam (106), in particular wherein the light source (104) is embodied as a laser diode.

4. Distance measuring device (100) according to any one of the preceding claims, **characterized in that** the light source (104) emits the beam in a wavelength range Lambda_B and the spherical lens (102) allows a major portion of light that is incident on the spherical lens (102) in the wavelength range Lambda_B to pass.

5. Distance measuring device (100) according to any one of the preceding claims, **characterized in that** the light source (104) is embodied to be displaceable in the z-direction (z).

6. Distance measuring device (100) according to any one of the preceding claims, **characterized by** at least one further spherical lens (114), wherein the further spherical lens (114) is embodied to direct the incident beam (118) onto the detector apparatus (116).

7. Distance measuring device (100) according to Claim 6, **characterized by** at least one optical additional unit (122) for directing the incident beam (118) onto the further spherical lens (114).

## Revendications

1. Dispositif de mesure de distance (100) comportant une unité optique de mise en forme de faisceau (102, 108) destinée à mettre en forme un faisceau lumineux (106), dans lequel l'unité optique de mise en forme de faisceau (102, 108) comprend au moins une lentille sphérique (102) servant à mettre en forme le faisceau lumineux (106), dans lequel la lentille sphérique (102) laisse passer une part principale de la lumière incidente sur la lentille sphérique (102) et dans lequel l'unité optique de mise en forme de faisceau (102, 108) comporte au moins une unité optique (108) présentant une distance focale effective positive qui est agencée sur un chemin de faisceau avec la lentille sphérique (102), **caractérisé en ce que** la lentille sphérique (102) et/ou l'unité optique (108) sont réalisées de manière à pouvoir être déplacées dans une direction z (z) par rapport à un système de coordonnées xyz, afin d'ajuster une divergence du faisceau lumineux en aval de l'unité optique, **en ce qu'**il est prévu au moins une source de lumière (104) pour générer le faisceau lumineux (106) et **en ce que** la direction z correspond à la direction de propagation du faisceau lumineux, dans lequel la lentille sphérique (102) est conçue pour former une image du faisceau lumineux (106) généré par la source de lumière (104) dans la direction de l'unité optique (108) et il est prévu un moyen de détection (116) pour détecter un faisceau lumineux incident (118).

2. Dispositif de mesure de la distance (100) selon la revendication 1, **caractérisé en ce que** l'unité optique (108) est réalisée sous la forme d'une lentille convergente, d'un miroir et/ou d'un système de lentilles.

3. Dispositif de mesure de distance (100) selon la revendication 1 ou 2, **caractérisé en ce que** la source de lumière (104) est conçue pour émettre un faisceau laser en tant que faisceau lumineux (106), en particulier dans lequel la source de lumière (104) est réalisée sous la forme d'une diode laser.

4. Dispositif de mesure de distance (100) selon l'une des revendications précédentes, **caractérisé en ce que** la source de lumière (104) émet le faisceau lumineux dans une plage de longueurs d'onde Lambda_B et **en ce que** la lentille sphérique (102) laisse passer une part principale de la lumière incidente sur la lentille sphérique (102) dans la plage de longueurs d'onde Lambda_B.

5. Dispositif de mesure de distance (100) selon l'une des revendications précédentes, **caractérisé en ce que** la source de lumière (104) est réalisée de manière à pouvoir être déplacée dans la direction (z).

6. Dispositif de mesure de distance (100) selon l'une des revendications précédentes, **caractérisé par** au moins une autre lentille sphérique (114), dans lequel l'autre lentille sphérique (114) est conçue pour orienter le faisceau lumineux (118) incident vers le moyen de détection (116).

7. Dispositif de mesure de distance (100) selon la revendication 6, **caractérisé par** au moins une autre unité optique (122) servant à orienter le faisceau lumineux incident (118) vers l'autre lentille sphérique (114).
